# FASCICULE DE BREVET EUROPEEN

(11) **EP 0 926 018 B1**
(45) Date de publication et mention de la délivrance du brevet: **07.07.2004**
(21) Numéro de dépôt: 98402956.1
(22) Date de dépôt: 26.11.1998
(51) Int. Cl.: B60R 21/34, B62D 25/10

(54) **Procédé de protection des piétons en cas de choc frontal avec un véhicle automobile et dispositif de mise en oeuvre du procédé**
Fussgängerschutzverfahren bei einem Frontalaufprall mit einem Kraftfahrzeug und Vorrichtung zur Durchführung des Verfahrens
Pedestrian protection method in case of a frontal collision with a motor vehicle and device for carrying out the method

(30) Priorité: 19.12.1997 FR 9716119
(43) Date de publication de la demande: 30.06.1999
(73) Titulaire: AUTOMOBILES PEUGEOT, 75116 Paris (FR); AUTOMOBILES CITROEN, 92200 Neuilly-sur-Seine (FR)
(72) Inventeur: Gumery, Xavier, 78220 Viroflay (FR)
(74) Mandataire: Gendraud, Pierre

(56) Documents cités:
- WO-A-97/18108
- DE-A- 2 711 338
- DE-A- 2 841 315
- GB-A- 2 056 923
- US-A- 4 249 632
- US-A- 5 437 348
- PATENT ABSTRACTS OF JAPAN vol. 098, no. 004, 31 mars 1998 & JP 09 315266 A (MITSUBISHI MOTORS CORP), 9 décembre 1997
- PATENT ABSTRACTS OF JAPAN vol. 098, no. 012, 31 octobre 1998 & JP 10 194158 A (NISSAN MOTOR CO LTD), 28 juillet 1998

## Description

L'invention se rapporte à un véhicule comportant un dispositif de protection des piétons en cas de choc frontal. L'invention concerne plus particulièrement un véhicule comportant un dispositif pour diminuer la gravité des chocs du piéton sur le capot du véhicule, notamment au niveau de la tête de ce dernier.

En cas de choc frontal d'un véhicule avec un piéton, la tête du piéton vient, en général, heurter violemment le capot. Lors de l'impact de la tête du piéton sur le capot, il se produit un enfoncement du capot jusqu'à un impact éventuel avec des éléments rigides situés sous le capot tels que la batterie, des éléments porteurs... De même, il peut se produire un impact direct avec des zones rigides du capot. Ces impacts contre les éléments rigides constituent la cause principale des décès ou des blessures graves des piétons renversés.

L'invention concerne un véhicule comportant :
- des moyens de détection d'un impact sur la partie frontale du véhicule constitués uniquement d'un dispositif du type contacteur disposé derrière le bandeau de pare-chocs ou au niveau des fixations du pare-chocs sur la caisse du véhicule; et
- des moyens de levage du capot du véhicule pour relever le capot au niveau de sa partie arrière de façon à ménager une cote d'enfoncement supérieure à 20mm au-dessus des parties rigides.

Un tel véhicule, conforme au préambule de la revendication 1, est connu du document JP-A-09-315 266. Cependant, ce type de véhicule n'assure pas une protection satisfaisante des piétons ou des passagers dans certaines situation du roulage du véhicule.

De même, les documents, DE-A-2 841 315 et US-A-4 249 632 décrivent des systèmes de protection consistant à relever le capot du véhicule lors de la détection d'un choc au niveau du pare-chocs du véhicule. Le document GB-A-2 056 923 décrit un véhicule dont le capot et les ailes adjacentes comportent des structures en U prévues pour se déformer par écrasement lors d'un impact avec un piéton. Cependant, ces systèmes connus s'avèrent inefficaces ou dangereux dans certaines situation du roulage du véhicule.

Le document WO-A-97/18108 décrit un véhicule comportant une pluralité de capteurs destinés à détecter l'impact d'un piéton, pour actionner un moyen de levage du capot tel qu'un sac gonflable lorsque les données détectées par les capteurs correspondent précisément avec la signature d'un impact avec un piéton. Pour éviter des déclenchements malveillants, le véhicule comporte des moyens de détection de sa vitesse, pour inhiber le fonctionnement du dispositif de protection des piétons lorsque la vitesse du véhicule n'est pas comprise entre 8 et 64 km/h.

Cependant, ce dispositif de protection a une structure complexe qui n'assure pas une protection satisfaisante des piétons ou des passagers dans certaines situation du roulage du véhicule.

Le document DE 2711338 enseigne un véhicule automobile comportant des moyens de détection d'un choc sur sa partie frontale et un sac gonflable situé à l'arrière du capot. La détection d'un impact déclenche le gonflement du sac à la base du pare-brise, pour éviter au piéton les impacts secondaires.

Cependant, ce dispositif de protection de piétons pose des problèmes d'implantation dans le véhicule en raison notamment des contraintes de style et de place disponible et du délai entre la détection du choc et le gonflement complet du sac. Par ailleurs, les déclenchements intempestifs du gonflement du sac peuvent s'avérer dangereux car le sac gonflé réduit de manière significative l'angle de vision du conducteur. En outre, ce dispositif ne protège le piéton qu'au niveau de la partie arrière du capot.

Un but de la présente invention est de pallier tout ou partie des inconvénients de l'art antérieur relevés ci-dessus en proposant un véhicule assurant une meilleure protection des piétons en cas de choc frontal.

Ce but est atteint par le fait que, le véhicule selon l'invention par ailleurs conforme à la définition générique qu'en donne le préambule ci-dessus, est essentiellement caractérisé en ce qu'il comporte des moyens de traitement et de commande comportant un dispositif du type calculateur relié d'une part à un appareil de mesure de la vitesse du véhicule et d'autre part aux moyens de levage du capot et assurant la comparaison de la vitesse du véhicule au moment de l'impact avec une plage de vitesses de référence déterminée, les moyens de traitement et de commande actionnant les moyens de levage du capot qu'en cas de détection d'un impact à une vitesse comprise dans la plage de vitesse de référence et en ce que la borne inférieure de la plage de vitesses de référence est comprise entre 14 et 20 km/h et la borne supérieure de la plage de vitesses de référence est comprise entre 42 et 48km/h.

Des configurations avantageuses de l'invention sont indiquées dans les revendications dépendantes.

D'autres caractéristiques et avantages de l'invention apparaîtront à la lecture de la description détaillée qui va suivre, pour la compréhension de laquelle on se reportera aux dessins annexés, dans lesquels :
- la figure 1 représente une vue en perspective et schématique d'un véhicule sur lequel est appliqué le système de protection des piétons selon l'invention,
- la figure 2 représente le schéma du principe de fonctionnement de l'invention,
- la figure 3 représente une vue en coupe simplifiée selon la ligne AA de la figure 1 le capot étant en position fermée, le système de protection étant déclenché,
- la figure 4 représente une vue en coupe simplifiée selon la ligne BB de la figure 1, le capot étant en position fermée et le système de protection armé, c'est-à-dire non déclenché,
- la figure 5A représente une vue de face et simplifiée d'un dispositif de levage du capot selon l'invention, en position rétractée ou armée.
- la figure 5B représente une vue de côté du dispositif de levage de la figure 5A,
- la figure 5C représente une vue en coupe selon CC de la figure 5B,
- La figure 6A représente une vue de face du dispositif de levage du capot de la figure 5A en position déployée,
- la figure 6B représente une vue de côté du dispositif de levage de la figure 6A,
- la figure 6C représente une vue en coupe selon DD de la figure 6B,
- la figure 7 représente une vue en coupe simplifiée de l'implantation selon l'invention d'un dispositif de levage du capot dans un véhicule dont le capot s'ouvre à l'arrière,
- la figure 8 représente schématiquement, en une vue de dessus, un capot de véhicule selon l'invention,
- la figure 9 représente une vue en coupe selon la ligne CC de la figure 8.
- la figure 10 représente une vue en perspective d'un détail du capot de la figure 8,
- la figure 11 représente une vue en coupe transversale, schématique et partielle, de l'avant d'un véhicule selon l'invention, illustrant la zone de jonction entre la capot et l'aile avant du véhicule,

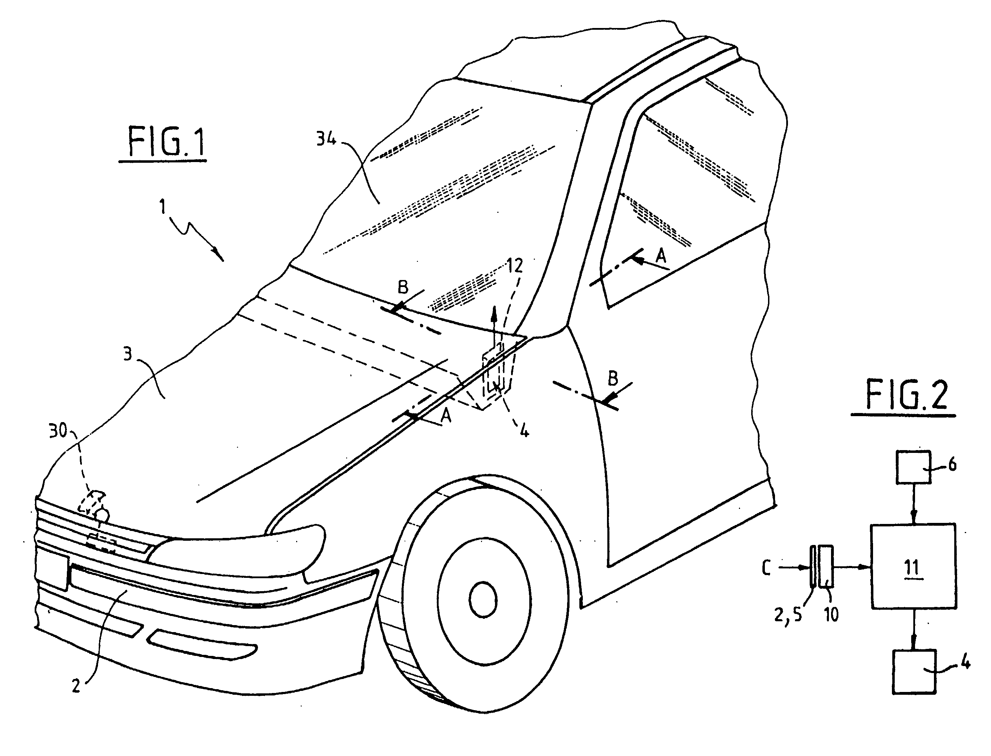

L'invention va à présent être décrite en référence aux figures 1 à 3, 5A à 5C et 6A à 6C.

La présente invention consiste, pour protéger les piétons en cas de choc frontal avec un véhicule 1 automobile, à détecter l'impact sur la partie 2 frontale du véhicule 1, à comparer la vitesse du véhicule 1 au moment de l'impact avec une plage de vitesses de référence déterminée, et à relever le capot 3 par sa partie arrière en cas de détection d'un impact à une vitesse comprise dans la plage de vitesses de référence. Le relèvement du capot 3 permet son enfoncement d'une cote déterminée lors de l'impact avec le piéton de façon à exploiter un assouplissement du capot 3 éventuellement réalisé, tout en évitant le choc du piéton sur les parties rigides du véhicule 1 qui sont situées sous le capot 3. C'est-à-dire que le capot 3 du véhicule 1 peut être redimensionné, c'est-à-dire assoupli, pour éviter les impacts directs ou primaires du piéton sur des zones rigides du capot 3

La figure 2 illustre schématiquement le principe de fonctionnement du dispositif de protection des piétons de l'invention. Le dispositif de protection comporte des moyens 10 de détection d'un impact sur la partie 2, 5 frontale du véhicule 1, des moyens 11 de traitement et de commande et des moyens 4 de levage du capot 3 du véhicule 1. Les moyens 11 de traitement et de commande, qui sont reliés d'une part à l'appareil 6 de mesure de la vitesse du véhicule 1 et d'autre part aux moyens 4 de levage du capot 3, comportent un dispositif du type calculateur.

La mesure de la vitesse du véhicule est effectuée de préférence sur le capteur de vitesse présent sur les véhicules à la sortie de la boîte de vitesse. De préférence également, le véhicule mettant en oeuvre l'invention comporte un dispositif d'Anti Blocage des Roues (ABR). pour que la vitesse mesurée corresponde effectivement à la vitesse du véhicule. En effet, en cas de blocage des roues le véhicule peut glisser à vive allure tandis que le compteur de vitesse indique une vitesse nulle.

Les moyens 10 de détection d'un impact sont constitués d'un dispositif du type contacteur, disposé derrière le bandeau 5 de pare-chocs 2 et/ou au niveau des fixations du pare-chocs 2 sur la caisse du véhicule 1. Ces moyens de détection peuvent être constitués d'une bande résistive ou capacitive telles que celles utilisées dans les dispositifs d'anti-pincement de lève-vitre électriques Le contacteur 10 est relié au calculateur 11 de façon à signaler au calculateur 11 tout choc C sur la partie avant du véhicule 1.

En cas de détection d'un choc par le contacteur 10, les moyens 11 de traitement et de commande font la comparaison de la vitesse du véhicule 1 au moment du choc C avec une plage de vitesses de référence déterminée. Dans le cas-où un choc est détecté à une vitesse comprise dans la plage de vitesses de référence, les moyens 11 de traitement et de commande 11 actionnent les moyens 4 de levage du capot 3.

La borne inférieure de la plage de vitesses de référence est comprise entre 13 et 20 km/h et est égale, de préférence, à 16 km/h. La borne supérieure de la plage de vitesses de référence est comprise entre 40 et 50 km/h et est égale, de préférence, à 45 km/h. Ainsi, de préférence et sans que se soit limitatif pour autant, la plage de vitesses de référence est constituée par toutes les vitesses comprises entre 16 et 45 km/h environ.

De cette façon, lorsqu'un choc est détecté à une vitesse inférieure à 16 km/h (borne inférieure de la plage de vitesses de référence), le calculateur n'actionne pas les moyens 4 de levage du capot 3. En effet, il y a en général peu de blessés et de faible gravité lors d'un choc à ces basses vitesses. De plus le choc peut être un choc autre que celui d'un piéton, par exemple un choc contre un autre véhicule à l'arrêt.

Lorsqu'un choc est détecté à une vitesse supérieure à 45 km/h (borne supérieure de la plage de vitesses de référence), le calculateur n'actionne pas les moyens 4 de levage du capot 3. En effet, à ces vitesses élevées, le choc devient très violent et le piéton peut heurter directement le pare-brise 34 du véhicule 1 ou être projeté au-dessus de ce dernier. Aussi, le relèvement du capot 3 ne s'avère pas efficace. Par ailleurs, le relèvement du capot 3 lors d'un choc à haute vitesse peut être dangereux car le capot 3 peut être projeté à l'intérieur de l'habitacle à travers le pare-brise en cas, par exemple, de collision frontale avec un autre véhicule. Avantageusement, le mécanisme selon l'invention sera, par sécurité, dimensionné pour ne pas casser lors d'un choc à grande vitesse.

Lorsqu'un véhicule 1 roulant à 40 km/h renverse un piéton, la tête du piéton heurte le capot 3 du véhicule 1 environ 250 ms après que le pare-chocs 2 a heurté ses jambes. Ainsi, le dispositif est conformé de façon que le relèvement du capot 3 intervienne dans un laps de temps inférieur à 250 ms environ après l'étape de détection d'un impact, par exemple 200 ms après l'impact.

Les moyens de levage du capot 3 sont constitués d'au moins un dispositif 4 déployable, positionné à l'arrière du capot 3 pour permettre, lors de son déploiement, la rotation du capot 3 soit par rapport à la où les serrures du mécanisme d'ouverture du capot dans le cas où ce dernier s'ouvre par l'avant, soit par rapport aux articulations ou charnières dans le cas où ce dernier s'ouvre par l'arrière.

Le dispositif 4 de levage déployable est conformé pour relever l'arrière du capot 3 de façon à ménager une cote d'enfoncement supérieure à 20 mm au-dessus des parties rigides. De préférence, le relèvement du capot ménage une cote d'enfoncement du capot 3 d'environ 80 mm au-dessus des parties rigides. C'est à dire que la raideur du capot 3 peut être dimensionnée pour exploiter toute la cote d'enfoncement dégagée par le relèvement du capot 3 mais sans l'excéder, pour éviter au piéton l'impact secondaire sur les parties rigides.

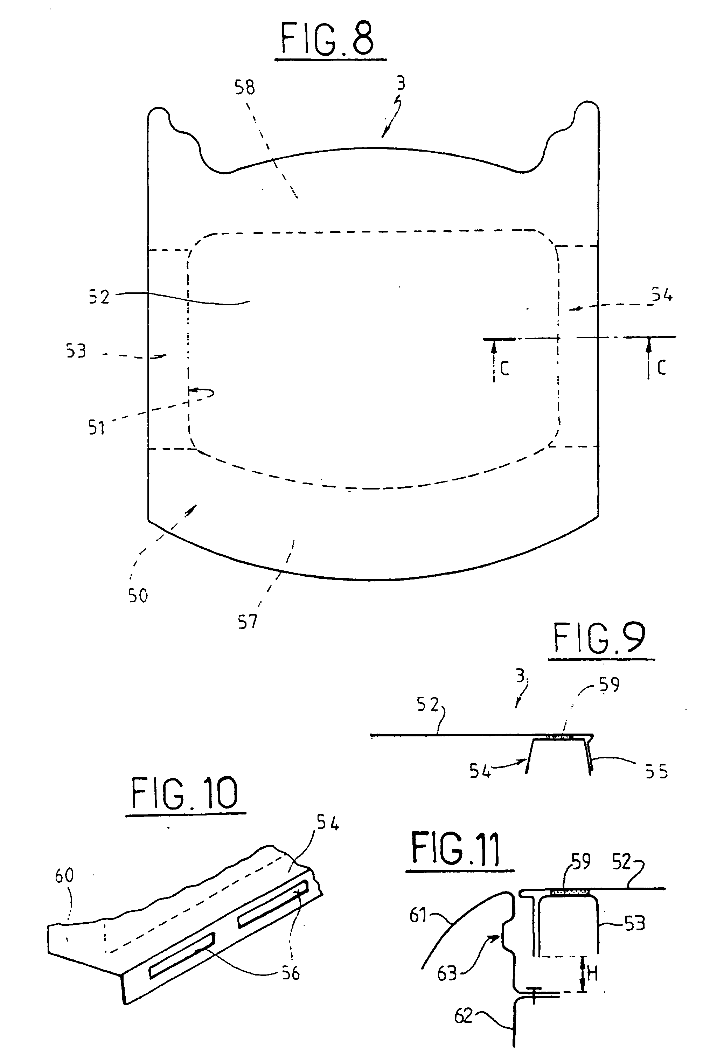

La figure 8 illustre un exemple de réalisation d'un capot 3 de véhicule selon l'invention. Le capot 3 est constitué d'un cadre 50 en tôle qui est ouvert dans sa partie centrale 51 et sur lequel est soudé une feuille de tôle 52. C'est-à-dire que le cadre 50 constitue la doublure du capot 3, tandis que la feuille 52 forme l'enveloppe extérieure de ce dernier. La structure des parties latérales 53, 54 du cadre 50 est déterminée de façon que ces dernières se déforment lorsqu'un piéton tombe sur le capot. pour absorber une grande partie de l'énergie résultant du choc, sans générer une décélération fatale.

Les deux portions latérales 53, 54 sont par exemple constituées chacune d'un profilé ayant une section transverse sensiblement en forme de U, l'ouverture du U étant orientée de préférence vers le bas, c'est-à-dire vers la structure du véhicule. Les profilés 53, 54 sont par exemple soudés aux parties avant 57 et arrière 58 du cadre 50. La feuille 52 extérieure est pliée sur le pourtour cadre 50 de façon à recouvrir ce dernier. La feuille 52 est soudée sur le pourtour du cadre 50. En particulier, dans les parties latérales du capot 3, la feuille 52 est de préférence soudée sur le flanc extérieur 55 de chaque profilé 53. 54. Un mastic peut être disposé entre la base du U formé par le profilé et la feuille 52 de tôle.

Par ailleurs, l'un ou les deux flancs des profilés 53, 54 en U peuvent comporter des ouvertures 56 prévues pour faciliter leur déformation lors d'un choc avec un piéton (figure 10). Ainsi, lorsqu'un piéton et notamment sa tête tombe sur les parties latérales du capot 3, les profilés 53, 54 s'écrasent. C'est-à-dire que les deux flancs parallèles du U s'écartent pour permettre l'aplatissement du profilé 53, 54. Avantageusement, les deux flancs des profilés en U peuvent être légèrement évasés vers le bas. Par ailleurs, les parties avant 57 et arrière 58 du cadre 50 sont conçues et dimensionnées pour pouvoir s'enfoncer et s'écraser lors d'un choc avec un piéton. C'est-à-dire que l'on ménage, sur la structure du véhicule, à l'avant et à l'arrière du capot 3, des cotes ou espaces permettant au capot 3 de s'enfoncer lors d'un choc avec un piéton. Par exemple, les parties avant 57 et arrière 58 du cadre 50 peuvent également être constituées de profilés en U.

Avantageusement. la structure de l'aile avant 61 du véhicule peut être conformée également de façon à pouvoir se déformer, pour éviter au piéton des blessures graves, notamment lorsque ce dernier heurte le véhicule au niveau de la jonction entre le capot 3 et l'aile avant 61. Par exemple, la doublure d'aile peut comporter au moins une amorce de pliage 63 facilitant la déformation de l'aile 61, par écrasement sur la structure 62, lors du choc avec le piéton (figure 11).

En cas d'impact au centre du capot 3, la structure décrite ci-dessus, qui est souple, permet un enfoncement important qui absorbe une grande partie de l'énergie du choc. De préférence, la feuille de tôle 52 recouvrant le cadre 50 a une faible épaisseur. c'est-à-dire de l'ordre de 0,6 mm.

Ainsi, la conception du capot 3 selon l'invention permet de réduire significativement la gravité des blessures des piétons, notamment lorsque le capot 3 est relevée consécutivement au choc avec le piéton.

De plus, les moyens 4 de levage du capot 3 peuvent avoir une raideur ou élasticité déterminée en position déployée, pour permettre leur écrasement ou enfoncement sans dommage lorsque le piéton, notamment sa tête, vient heurter la partie du capot 3 relevé qui est située directement au-dessus des moyens 4 de levage.

Les figures 1, 3 et 4 représentent l'application de l'invention à un véhicule 1 automobile dont le capot 3 s'ouvre par l'avant. Le véhicule 1 comporte un dispositif 4 de levage déployable disposé de façon à assurer, lors de son déploiement. le levage d'une articulation 12 du mécanisme de fermeture du capot 3. C'est à dire que le déploiement du dispositif 4 de levage permet la rotation du capot 3 par rapport la serrure 30 de son mécanisme d'ouverture.

Le dispositif 4 de levage déployable comporte un support 7 rendu solidaire par tout moyen approprié d'un élément fixe du véhicule 1, un élément 8 mobile par rapport au support 7 et mécanisme 15 à 18 de mise en mouvement de l'élément 4 mobile par rapport au support 7 fixe.

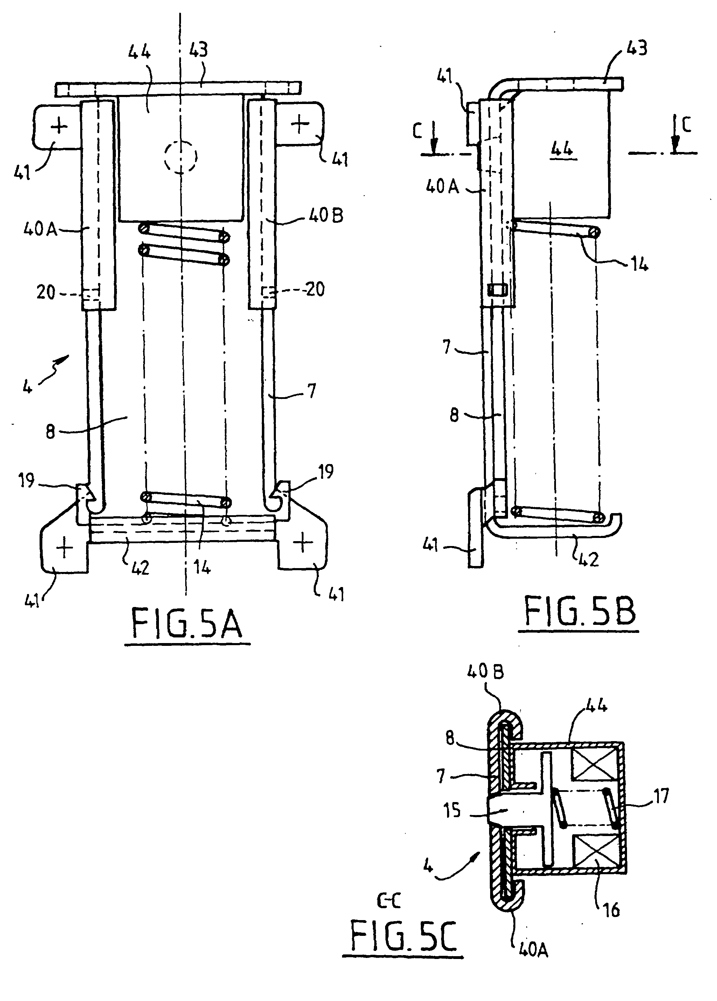

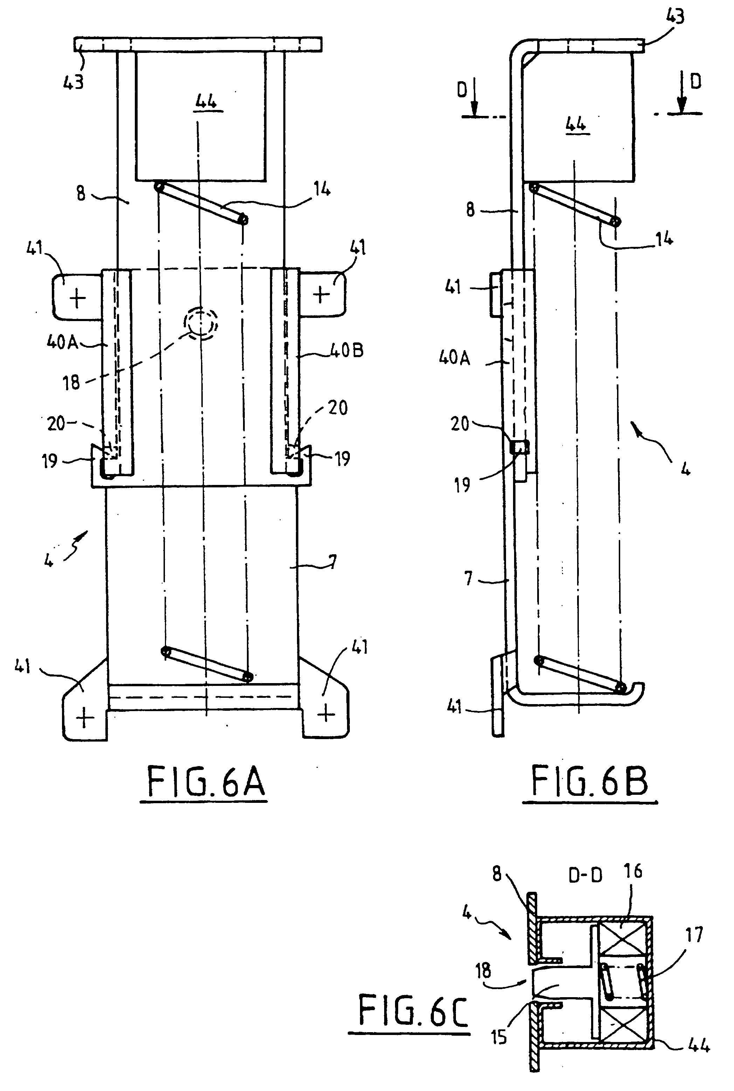

Comme représenté aux figures 5A à 5C et 6A à 6C, le support 7 fixe est constitué d'un corps ayant sensiblement la forme d'une plaque rectangulaire et pourvue, au niveau de chacun de ses coins, d'une patte 41 prévue pour permettre sa fixation, par exemple par vissage sur une partie fixe du véhicule. L'extrémité inférieure de la plaque rectangulaire constituant le support 7 est repliée à 90 degrés environ de façon à former une surface d'appui pour le' mécanisme de mise en mouvement de l'élément 8 mobile. Les parties supérieures 40A, 40B des deux bords verticaux du support 7 sont repliées symétriquement l'une vers l'autre de façon à constituer des moyens de guidage pour une seconde plaque 8 rectangulaire constituant l'élément 8 mobile du dispositif 4 de levage. C'est-à-dire que l'élément 8 mobile, qui est guidé par les bords repliés 40A, 40B, peut coulisser sur le support 7.

L'extrémité supérieure 43 de l'élément 8 mobile fait saillie au-dessus du bord supérieur du support 7 et est repliée à 90 degrés environ dans la même direction que la partie inférieure 42 repliée du support 7. Un boîtier 44 de déclenchement est fixé sur la partie supérieure de l'élément 8 mobile, au niveau du coin formé par l'extrémité 43 repliée. Le boîtier 44 est fixé sur le corps de l'élément 8 mobile et/ou sur sa partie 43 supérieure repliée.

Le mécanisme de mise en mouvement de l'élément 8 mobile par rapport au support 7 fixe comporte un premier ressort 14 de compression dont une extrémité prend appui sur la partie 42 inférieure repliée du support 7 fixe et l'autre extrémité sur la face inférieure du boîtier 44 de déclenchement. Le mécanisme de mise en mouvement de l'élément 8 mobile comporte également des premiers moyens de verrouillage 15 à 18 débrayables assurant le maintien de l'élément 8 mobile en position rétractée ou armée par rapport au support 7 fixe (figures 5A à 5C).

Lorsque le dispositif 4 de levage est en position armée, le premier ressort 14 est comprimé de façon à solliciter en permanence l'élément mobile 8 dans le sens de son déploiement par rapport au support 7 fixe.

Les premiers moyens de verrouillage 15 à 18 débrayables sont situés dans le boîtier 44 de déclenchement et sont constitués d'un doigt 15 de verrouillage mobile assurant. suivant sa position, le blocage ou non de l'élément 8 mobile sur le support 7 fixe. Le doigt 15 de verrouillage est métallique et mobile dans une direction sensiblement perpendiculaire au plan contenant le corps du support 7 fixe. Le doigt 15 de verrouillage est poussé par un second ressort 17 de compression situé dans le boîtier 44 de façon que l'extrémité du doigt 15 s'engage simultanément dans un trou ménagé dans le corps du support 7 fixe et dans un trou ménagé dans le corps de l'élément 8 mobile (figure 5C). De cette façon, l'élément 8 mobile est bloqué en position armée sur le support 7 fixe, malgré la pression du premier ressort 14.

Un électro-aimant 16 commandé par les moyens 11 de traitement et de commande permet de déplacer le doigt 15 de verrouillage dans le sens dans lequel il sort du trou formé dans le support 7 fixe. C'est à dire que, sous l'action de l'électro-aimant 16 le doigt 15 vient comprimer le second ressort 17 et libérer l'élément 8 mobile qui est alors propulsé vers le haut par le premier ressort 14.

Le dispositif 4 de levage déployable peut comporter par ailleurs des seconds moyens de verrouillage 19, 20 débrayables à partir d'un effort calibré assurant le maintien de l'élément 8 mobile en position déployée. Ces seconds moyens 19, 20 de verrouillage sont constitués de griffes 19 formées sur les bords latéraux de la partie inférieure de l'élément 8 mobile et venant se clipper dans des orifices 20 complémentaires formés dans les bords 40A, 40B repliés du support 7 fixe. Bien sûr, les seconds moyens de verrouillage 19, 20 débrayables assurant le maintien de l'élément 8 mobile en position déployée sur le support 8 fixe peuvent être constitués de tout autre mécanisme équivalent.

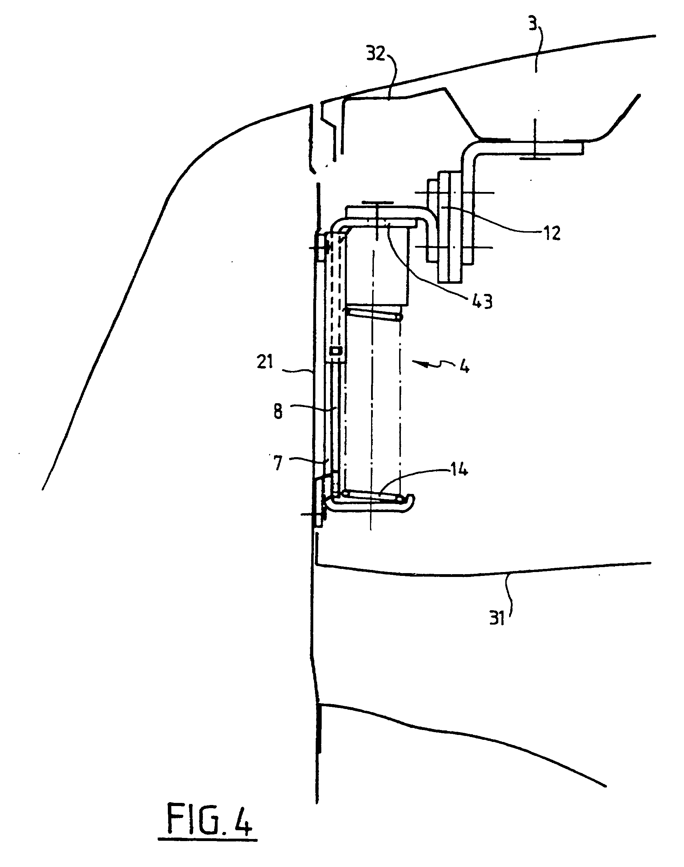

Comme représenté à la figure 4, le support 7 fixe peut être vissé sur la doublure 21 d'aile du véhicule 1, au-dessus de l'auvent 31. L'élément 8 mobile, qui est coulissant sur le support 7 fixe, constitue un support actif pour une charnière 12 du mécanisme d'ouverture du capot 3. C'est-à-dire que la charnière 12 est fixée, par exemple par vissage, d'une part sur la partie 43 supérieure de l'élément 8 mobile et d'autre part sur la doublure 32 de capot 3.

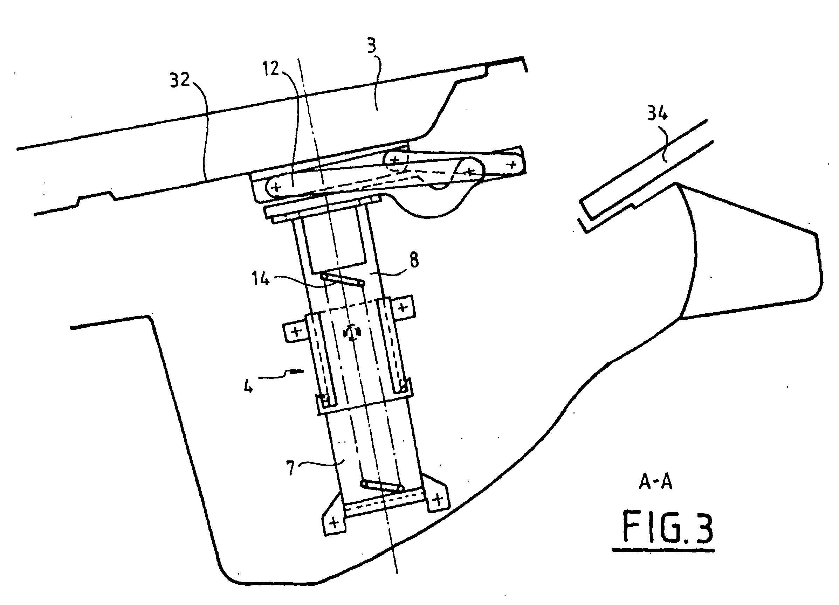

Dans l'exemple représenté aux figures 3 et 4, la charnière 12 est du type "parallélogramme" mais bien entendu, l'invention s'applique également à tout autre type de charnière comme, par exemple, une charnière du type "axe simple" ou "col de cygne".

A la figure 4, le dispositif de levage est en position armée. le capot 3 est en position normale de fermeture. On conçoit aisément que, comme représenté à la figure 3, le déploiement du dispositif 4 de levage soulève le capot 3 d'une cote déterminée de plusieurs dizaines de millimètres par rapport à sa position normale de fermeture. En effet, l'élément 8 mobile, qui constitue le support de la charnière 12, soulève cette dernière et donc le capot 3 lorsqu'il est propulsé vers le haut par le premier 14 ressort. La valeur du relèvement du capot 3 est déterminée par les dimensions et caractéristiques structurelles du dispositif 4 de levage et de son implantation sur le véhicule 1. De préférence, sans que se soit limitatif, le dispositif de levage a une hauteur de l'ordre de 100 mm environ et une largeur de 50 mm environ.

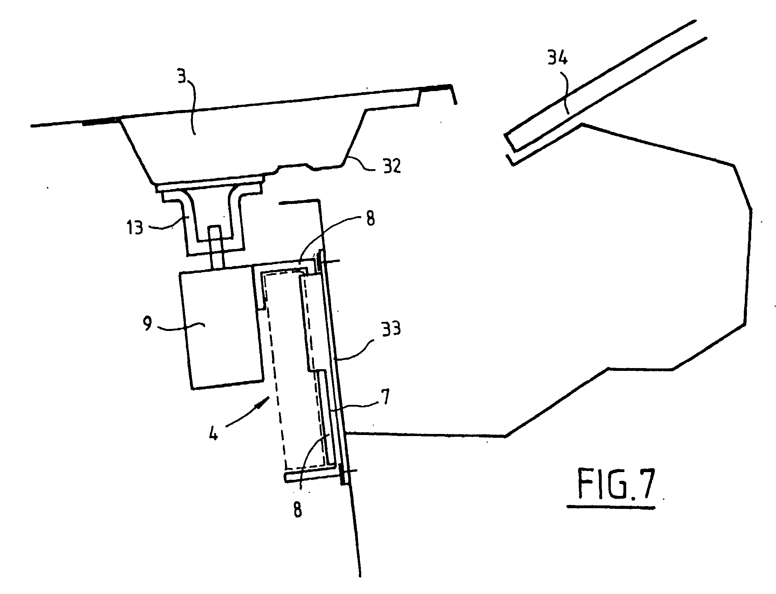

Bien sûr, et comme représenté à la figure 7, l'invention peut être appliquée aux véhicules automobiles dont le capot 3 s'ouvre par l'arrière, à proximité du pare-brise 34. Par soucis de simplification, le dispositif 4 de levage est représenté partiellement à la figure 7. Dans cette application, le dispositif 4 de levage assure, lors de son déploiement, le levage d'une serrure 9 du mécanisme de fermeture du capot 3. C'est à dire que le déploiement du dispositif 4 de levage permet la rotation du capot 3 par rapport aux charnières (non représentées) du mécanisme d'ouverture. Ainsi, la serrure 9 est fixée à l'élément 8 mobile du dispositif 4 de levage et l'élément 7 fixe est fixé à la caisse 33 du véhicule 1. Le fil 13 de gâche de la serrure est fixé quant à lui sur la doublure 32 de capot 3.

On conçoit ainsi aisément que l'on a un procédé et un dispositif de protection des piétons, simples, d'une grande efficacité et sécurité. En effet, le système de protection de piéton selon l'invention peut être implanté facilement sous le capot du véhicule sans pénaliser ni le style ni l'architecture de ce dernier. Ce système est par ailleurs peu coûteux, interchangeable et éventuellement réparable après un choc. Les dimensions réduites du dispositif 4 de levage permet son implantation dans la plupart des véhicules existants. quel que soit le type de charnières ou gâches ou serrures du mécanisme de fermeture du capot 3. De plus, la sécurité du véhicule est assurée en cas de déclenchement intempestif du dispositif 4 de levage du capot 3 car, lorsque le capot 3 est en en position relevée, seul l'angle de vision vers le bas est diminué.

Bien sûr, l'invention n'est pas limitée aux exemples décrits ci-dessus. Ainsi, il est possible de prévoir que plusieurs dispositifs 4 de levage assurent le relèvement du capot. De même, les moyens de mise en mouvement de l'élément 8 mobile, qui sont constitués par le ressort 14, peuvent être remplacé par une cartouche pyrotechnique ou tout autre moyen équivalent. Enfin, le doigt de verrouillage commandé électromagnétiquement peut être remplacé par une goupille pyrotechnique fusible ou tout moyen équivalent.

## Revendications

1. Véhicule automobile comportant:
- des moyens (10) de détection d'un impact sur la partie (2) frontale du véhicule (1) constitués uniquement d'un dispositif du type contacteur disposé derrière le bandeau (5) de pare-chocs (2) ou au niveau des fixations du pare-chocs (2) sur la caisse du véhicule; et
- des moyens (4) de levage du capot (3) du véhicule (1) pour relever le capot au niveau de sa partie arrière de façon à ménager une cote d'enfoncement supérieure à 20mm au-dessus des parties rigides,
**caractérisé en ce qu**'il comporte des moyens (11) de traitement et de commande comportant un dispositif du type calculateur relié d'une part à un appareil (6) de mesure de la vitesse du véhicule (1) et d'autre part aux moyens (4) de levage du capot et assurant la comparaison de la vitesse du véhicule (1) au moment de l'impact avec une plage de vitesses de référence déterminée, les moyens (11) de traitement et de commande actionnant les moyens (4) de levage du capot (3) qu'en cas de détection d'un impact à une vitesse comprise dans la plage de vitesse de référence et en ce que la borne inférieure de la plage de vitesses de référence est comprise entre 14 et 20 km/h et la borne supérieure de la plage de vitesses de référence est comprise entre 42 et 48 km/h.

2. Véhicule selon la revendication 1, **caractérisé en ce que**, lors du levage, le capot (3) est relevé au niveau de sa partie arrière de façon à ménager une cote d'enfoncement de l'ordre de 50 à 80 mm au-dessus des parties.

3. Véhicule selon la revendication 1 ou 2, **caractérisé en ce que** le capot (3) est constitué d'un cadre (50) en tôle qui est ouvert dans sa partie centrale (51) et sur lequel est soudé une feuille de tôle (52), et **en ce que** les parties du cadre (50) constituant l'avant (57), l'arrière (58) et les parties latérales (53, 54) du capot (3) sont conformées de façon à se déformer par écrasement lors d'un choc avec un piéton, et **en ce que** les portions (53, 54) du cadre constituant les parties latérales du capot (3) sont constituées chacune d'un profilé ayant une section transverse sensiblement en forme de U, l'ouverture du U étant orientée vers le bas, c'est-à-dire vers la structure du véhicule.

4. Véhicule selon la revendication 3, **caractérisé en ce que** la feuille (52) extérieure est pliée et est soudée sur le pourtour du cadre (50) de façon à recouvrir ce dernier, dans les parties latérales du cadre (50), la feuille (52) étant soudée sur le flanc extérieur de chaque profilé (53, 54).

5. Véhicule selon la revendication 3 ou 4, **caractérisé en ce que** l'un au moins des flancs des profilés (53, 54) en U comporte des découpes (56) prévues pour faciliter leur écrasement.

6. Véhicule selon l'une quelconque des revendication 1 à 5, **caractérisé en ce que** les moyens (11) de traitement et de commande mesurent la vitesse du véhicule au niveau du capteur de vitesse situé à la sortie de la boîte de vitesse du véhicule, le véhicule comportant un système d'Anti Blocage des Roues.

7. Véhicule selon l'une quelconque des revendications 1 à 6, **caractérisé en ce que** les moyens (4) de levage du capot (3) sont constitués d'au moins un dispositif (4) déployable assurant soit le levage d'au moins une articulation (12) du mécanisme de fermeture du capot (3) dans le cas où ce dernier s'ouvre par l'avant du véhicule (1), soit le levage d'une serrure (9) du mécanisme de fermeture du capot (3) dans le cas où ce dernier s'ouvre par l'arrière.

8. Véhicule selon la revendication 7, **caractérisé en ce que** le dispositif (4) de levage déployable est positionné à l'arrière du capot (3) pour permettre, lors de son déploiement, la rotation du capot (3) soit par rapport la où les serrures (30) du mécanisme d'ouverture du capot (3) dans le cas où ce dernier s'ouvre par l'avant, soit par rapport aux charnières dans le cas où ce dernier s'ouvre par l'arrière.

## Patentansprüche

1. Kraftfahrzeug, das Folgendes aufweist:
- Mittel (10) zum Erfassen eines Aufpralls an der Frontseite (2) des Fahrzeugs (1), die nur aus einer Vorrichtung von der Art eines Schalters bestehen, der hinter dem Streifen (5) des Stoßfängers (2) oder auf der Höhe der Befestigungen des Stoßfängers (2) am Gehäuse des Fahrzeugs angeordnet ist; und
- Mittel (4) zum Anheben der Motorhaube (3) des Fahrzeugs (1), die die Motorhaube an ihrem hinteren Abschnitt anheben, sodass eine Eindrückhöhe von mehr als 20 Millimetern über den starren Teilen vorgesehen ist,
**dadurch gekennzeichnet ist, dass** es Mittel (11) zum Verarbeiten und Steuern mit einer Vorrichtung von der Art eines Rechners aufweist, der zum einen mit einem Gerät (6) zur Messung der Geschwindigkeit des Fahrzeugs (1) und zum anderen mit Mitteln (4) zum Anheben der Motorhaube verbunden ist und die Geschwindigkeit des Fahrzeugs (1) im Moment des Aufschlags mit einer bestimmten Referenz-Geschwindigkeitsspanne vergleicht, wobei die Mittel (11) zum Verarbeiten und Steuern die Mittel (4) zum Anheben der Motorhaube (3) nur dann betätigen, wenn ein Aufschlag bei einer Geschwindigkeit innerhalb der Referenz-Geschwindigkeitsspanne festgestellt wird, und dadurch dass, die untere Grenze der Referenz-Geschwindigkeitsspanne zwischen 14 und 20 Stundenkilometer und die obere Grenze der Referenz-Geschwindigkeitsspanne zwischen 42 und 48 Stundenkilometer liegt.

2. Fahrzeug nach Anspruch 1, **dadurch gekennzeichnet, dass** die Motorhaube (3) beim Anheben an ihrem hinteren Abschnitt derart angehoben wird, dass eine Eindrückhöhe in der Größenordnung von 50 bis 80 Millimeter über diesen Abschnitten entsteht.

3. Fahrzeug nach Anspruch 1 oder 2, **dadurch gekennzeichnet, dass** die Motorhaube (3) von einem Rahmen (50) aus Blech gebildet wird, der in seinem mittleren Abschnitt (51) offen ist und an den eine Blechtafel (52) geschweißt ist, und dadurch, dass die Abschnitte des Rahmens (50), die die Vorderseite (57), die Hinterseite (58) und die Seitenteile (53, 54) der Motorhaube (3) bilden, so geformt sind, dass sie bei einem Zusammenstoß mit einem Fußgänger eingedrückt werden, und dadurch, dass die Abschnitte (53, 54) des Rahmens, die die Seitenteile der Motorhaube (3) bilden, jeweils aus einem Profil mit im Wesentlichen U-förmigem Querschnitt bestehen, wobei die Öffnung des U nach unten, das heißt zum Fahrzeugaufbau zeigt.

4. Fahrzeug nach Anspruch 3, **dadurch gekennzeichnet, dass** die äußere Tafel (52) umgebogen und derart an den Umfang des Rahmens (50) geschweißt ist, dass sie diesen bedeckt, wobei die Tafel (52) an den Seitenteilen des Rahmens (50) an die äußere Flanke jedes Profils (53, 54) geschweißt ist.

5. Fahrzeug nach Anspruch 3 oder 4, **dadurch gekennzeichnet, dass** mindestens eine der Flanken der U-förmigen Profile (53, 54) Ausschnitte (56) aufweist, die ihr Eindrücken erleichtern.

6. Fahrzeug nach einem der Ansprüche 1 bis 5, **dadurch gekennzeichnet, dass** die Mittel (11) zum Verarbeiten und Steuern die Geschwindigkeit des Fahrzeugs am Geschwindigkeitssensor messen, der am Ausgang des Fahrzeuggetriebes angeordnet ist, wobei das Fahrzeug ein ABS-System aufweist.

7. Fahrzeug nach einem der Ansprüche 1 bis 6, **dadurch gekennzeichnet, dass** die Mittel (4) zum Anheben der Motorhaube (3) von mindestens einer ausfahrbaren Vorrichtung (4) gebildet werden, die entweder für das Anheben von mindestens einem Gelenk (12) des Schließmechanismus der Motorhaube (3) sorgt, falls diese an der Vorderseite des Fahrzeugs (1) geöffnet wird, oder für das Anheben eines Schlosses (9) des Schließmechanismus der Motorhaube (3), falls sie hinten geöffnet wird.

8. Fahrzeug nach Anspruch 7, **dadurch gekennzeichnet, dass** die ausfahrbare Hebevorrichtung (4) an der Hinterseite der Motorhaube (3) positioniert ist und bei ihrem Ausfahren die Motorhaube (3) entweder gegenüber dem oder den Schlössern (30) des Öffnungsmechanismus der Motorhaube (3) dreht, falls diese vorne geöffnet wird, oder gegenüber den Scharnieren, falls sie hinten geöffnet wird.

## Claims

1. Motor vehicle comprising:
- means (10) for detecting an impact on the front part (2) of the vehicle (1) constituted solely by a device of the contactor type arranged behind the strip (5) of the bumper (2) or at the level of the fixings of the bumper (2) on the vehicle body; and
- means (4) for lifting the bonnet (3) of the vehicle (1) in order to raise the bonnet at the level of its rear part in order to provide a dent size greater than 20 mm above the rigid parts,
**characterised in that** it comprises processing and control means (11) comprising a calculator-type device connected, on the one hand, to an apparatus (6) for measuring the speed of the vehicle (1) and, on the other hand, to the means (4) for lifting the bonnet and comparing the speed of the vehicle (1) at the time of impact with a given range of reference speeds, the processing and control means (11) actuating the means (4) for lifting the bonnet (3) only in the event of detecting an impact at a speed within the range of reference speed and **in that** the lower limit of the range of reference speeds is between 14 and 20 km/h and the upper limit of the range of reference speeds is between 42 and 48 km/h.

2. Vehicle according to Claim 1, **characterised in that**, during lifting, the bonnet (3) is raised at the level of its rear part in order to provide a dent size of the order of 50 to 80 mm above the parts.

3. Vehicle according to Claim 1 or 2, **characterised in that** the bonnet (3) is constituted by a framework (50) made of sheet metal that is open in its central part (51) and to which a sheet of metal is welded (52), and **in that** the parts of the framework (50) constituting the front (57), the rear (58) and the side parts (53, 54) of the bonnet (3) are shaped so as to become deformed by crushing during an impact with a pedestrian, and **in that** the portions (53, 54) of the framework constituting the side parts of the bonnet (3) are each constituted by a profile having a substantially U-shaped cross section, the opening of the U facing downwards, i.e. towards the structure of the vehicle.

4. Vehicle according to Claim 3, **characterised in that** the outer sheet (52) is folded and is welded to the periphery of the framework (50) so as to cover the latter, in the side parts of the framework (50), the sheet (52) being welded to the outer side of each profile (53, 54).

5. Vehicle according to Claim 3 or 4, **characterised in that** at least one of the sides of the U-shaped profiles (53, 54) has cut-outs (56) designed to facilitate their crushing.

6. Vehicle according to any one of Claims 1 to 5, **characterised in that** the processing and control means (11) measure the speed of the vehicle at the speed sensor located on the outlet of the gear box of the vehicle, the vehicles comprising an anti-lock system for wheels.

7. Vehicle according to any one of Claims 1 to 6, **characterised in that** the means (4) for lifting the bonnet (3) are constituted by at least one deployable device (4) ensuring either the lifting of at least one articulation (12) of the mechanism for closing the bonnet (3) where the latter opens at the front of the vehicle (1), or the lifting of a lock (9) of the mechanism for closing the bonnet (3) where the latter opens at the rear.

8. Vehicle according to Claim 7, **characterised in that** the deployable lifting device (4) is positioned at the back of the bonnet (3) so that, during its deployment, the rotation of the bonnet (3) either with respect to the locks (30) of the opening mechanism for the bonnet (3), where the latter opens at the front, or with respect to the hinges where the latter opens at the rear.
